Europäisches Patentamt

European Patent Office

Office européen des brevets

(11) Veröffentlichungsnummer: **0 354 988**

**A1**

## (12) EUROPÄISCHE PATENTANMELDUNG

(21) Anmeldenummer: 89111643.6

(22) Anmeldetag: 27.06.89

(51) Int. Cl.4: **F16D 43/202**

(30) Priorität: 16.08.88 DE 3827672

(43) Veröffentlichungstag der Anmeldung:
21.02.90 Patentblatt 90/08

(84) Benannte Vertragsstaaten:
AT BE CH DE ES FR GB GR IT LI LU NL SE

(71) Anmelder: **ATEC-Weiss KG**
**Von-Siemens-Strasse 1**
**D-4426 Vreden(DE)**

(72) Erfinder: **Scheithauer, Günter**
**Bree 8**
**D-4426 Vreden(DE)**

(74) Vertreter: **Patentanwaltsbüro Cohausz &**
**Florack**
**Postfach 14 01 20 Schumannstrasse 97**
**D-4000 Düsseldorf 1(DE)**

(54) Wiedereinschaltbare Sicherheitskupplung mit gleichmässiger Abstützung.

(57) Die Erfindung bezieht sich auf eine wiedereinschaltbare Sicherheitskupplung mit einer ersten, in
Bezug zu einer auf einer Welle 1 angeordneten
Nabe 2 drehbeweglichen Kupplungshälfte 3 und einer zweiten, drehfest an der Nabe 2 angeschlossenen und gegen die Nabe 2 axial nachgiebig abgestützten Kupplungshälfte 4, wobei die beiden Kupplungshälften 3,4 jeweils Zahnprofile 9a,9b aufweisen,
deren Formschluß im eingeschalteten Zustand nach
axialer Beaufschlagung der zweiten Kupplungshälfte
aufgehoben ist, wobei zur Vermeidung von Unwuchten und Schrägstellungen der Kupplungshälften mindestens zwei in Umfangsrichtung symmetrisch angeordnete und radial zueinander versetzte, die Zahnprofile 9a,9b nicht winkelrichtiger Zuordnung der
Kupplungshälften 3,4 außer Eingriff haltende Abstützungen 11,11a,13 und für jede Abstützung 11,11a,13
eine bei winkelrichtiger Zuordnung der Kupplungshälften 3,4 die jeweilige Abstützung 11,11a,13 aufnehmende Versenkung 12,14 vorgesehen sind.

Fig. 2

## Wiedereinschaltbare Sicherheitskupplung mit gleichmäßiger Abstützung

Die Erfindung betrifft eine wiedereinschaltbare Sicherheitskupplung mit einer ersten, in Bezug zu einer auf einer Welle angeordneten Nabe drehbeweglichen Kupplungshälfte, mit einer zweiten, drehfest an der Nabe angeschlossenen und gegen die Nabe axial nachgiebig abgestützten Kupplungshälfte, wobei die beiden Kupplungshälften im eingeschalteten Zustand der Kupplung formschlüssig ineinandergreifen und im freigeschalteten Zustand nach axialer Beaufschlagung der zweiten Kupplungshälfte der Formschluß aufgehoben ist, mit mindestens zwei in Umfangsrichtung symmetrisch angeordneten und radial zueinander versetzten, die Kupplungshälften bei nicht winkelrichtiger außer Eingriff haltenden Abstützungen und mit die Abstützungen bei winkelrichtiger Zuordnung der Kupplungshälften aufnehmenden Versenkungen.

Eine wiedereinschaltbare Sicherheitskupplung ist beispielsweise aus der älteren Anmeldung P 38 19 481 der Anmelderin bekannt, bei der die Kupplungshälften über Zahnprofile einer Planverzahnung formschlüssig ineinandergreifen. Eine Kupplung dieser Gattung schaltet bei Überlast frei, wenn bei Überschreiten des zulässigen Drehmomentes sich die Zahnprofile der Planverzahnung gegeneinander verdrehen und somit die axial verschiebbare zweite Kupplungshälfte sich gegen die nachgiebige Abstützung verschiebt. Soll nun die Kupplung nach dem Freischalten wieder eingeschaltet werden, so ist es für besondere Anwendungen, zum Beispiel bei Werkzeugmaschinen, Verpackungsmaschinen und Druckmaschinen bedeutsam, daß das Wiedereinschalten der Kupplung nur bei der winkelrichtigen Zuordnung der beiden Kupplungshälften zueinander, das heißt, bei der Zuordnung, in der die Kupplungshälften vor dem Freischalten zueinander eingestellt waren, erfolgt. Hierzu ist es bekannt, auf dem Umfang der beiden Kupplungshälften im Bereich der Zahnprofile Winkelmarkierungen anzubringen, so daß anhand deren Übereinstimmung die richtige Winkelzuordnung vor dem Wiedereinschaltvorgang festgestellt werden kann. Da allein durch solche Markierungen jedoch ein unbeabsichtigtes Fehleinschalten nicht verhindert wird, ist es als konstruktive Maßnahme bekannt, das ansonsten gleichmäßige Zahnprofil der beiden Kupplungshälften im Bereich der Markierungslinien auf etwa die doppelte Breite eines einzelnen Zahnes zu vergrößern. Hierdurch wird gewährleistet, daß die Zahnprofile beim Wiedereinschalten nur dann ineinandergreifen, wenn die Kupplungshälften winkelrichtig zugeordnet sind. Allerdings entsteht durch die Unsymmetrie des Zahnprofils an der Zahnverbreiterung eine Unwucht, weswegen in einer anderen bekannten Lösung drei unsymmetrisch über den Umfang verteilte Zahnverbreiterungen vorgeschlagen wurden. Dennoch sind die Unsymmetrien bei dieser Lösung, insbesondere bei schnellaufenden Kupplungen, von Nachteil. Darüber hinaus kommt es aufgrund der unsymmetrischen Auflageflächen an den Zahnprofilen zu einer Schiefstellung der Kupplungshälften zueinander.

Eine Sicherheitskupplung der eingangs genannten Art ist aus dem DE-GM 7640820 bekannt. Bei dieser bekannten Kupplung erfolgt der Formschluß zwischen beiden Kupplungshälften über Rollen, wobei die für die Drehmomentübertragung verwendeten Rollen auf einer äußeren Bahn und die als Abstützung verwendete Rolle auf einer Innenbahn geführt wird. Durch diese Lösung wird eine Schiefstellung der Kupplungshälften beim Auslösen verhindert. Auch wird hierdurch erreicht, daß ein Wiedereinschalten der Kupplung jeweils nur bei einer vollständigen 360°-Drehung erreicht wird.

Allerdings bietet die Verwendung von Rollen fertigungstechnische Schwierigkeiten, da diese während der Endmontage der Kupplung von außen eingesetzt werden müssen. Auch sind die Rollen bei einer häufigen Betätigung der Kupplung einem bestimmten Verschleiß unterworfen und müssen zudem regelmäßig geschmiert werden.

Demgegenüber liegt der Erfindung die Aufgabe zugrunde, eine wiedereinschaltbare Sicherheitskupplung der eingangs genannten Art derart zu verbessern, daß die Herstellung vereinfacht wird und die Kupplung nahezu wartungsfrei wird.

Diese Aufgabe wird gemäß einer Alternative der Erfindung dadurch gelöst, daß die Kupplungshälften über Zahnprofile einer Planverzahnung formschlüssig ineinandergreifen, wobei die Stirnflächen der Zahnprofile eine Abstützung bilden und daß als weitere Abstützung ein an einer Kupplungshälfte radial zum Zahnprofil versetzt angebrachter Zapfen vorgesehen ist, dessen Länge mindestens der Tiefe des Zahnprofils entspricht, und dem eine auf dem gleichen Teilkreis liegende Versenkung zugeordnet ist, in die der Zapfen bei winkelrichtiger Zuordnung der Kupplungshälften vollständig einsenkbar ist.

Die Erfindung zeichnet sich dadurch aus, daß als Abstützung die bereits vorhandenen Flanken des Zahnprofils verwendet werden können, wobei die zwischen den Stirnflächen liegenden Zahnflanken bzw. Fußflächen als Versenkung für die Stirnflächen dienen. Somit können bereits vorhandene Kupplungen ausgestaltet werden, so daß hierdurch der konstruktive Aufwand gering bleibt. Der an der einen Kupplungshälfte angebrachte Zapfen gleitet bis zum Erreichen der winkelrichtigen Zuordnung der Kupplungshälften an der Planfläche der anderen Kupplungshälfte, bis er schließlich in die ihm zugeordnete Versenkung einrastet. Da der Zapfen selbst keine drehmomentübertragende Funktion ausüben muß, kann er vergleichsweise einfach aufgebaut sein, beispielsweise in Form eines Kunststoffzapfens.

Vorzugsweise dienen als weitere Abstützung die Stirnflächen in dem dem Zapfen diametral gegenüberliegenden Bereich des Zahnflankenprofils und als Versenkung die zwischen den Stirnflächen liegenden Zahnflanken und Fußflächen. Hierdurch ergibt sich eine besonders gleichmäßige Auflage.

Als weitere bevorzugte Ausführungsform ist vorgesehen, daß die Zahnbreite in dem dem Zapfen diametral gegenüberliegenden Bereich mindestens um den Faktor 2 vergrößert ist. Auch hierdurch ergibt sich die gewünschte Zweipunktauflage der Kupplungshälften, so daß eine Schrägstellung der Kupplungshälften vermieden wird.

Die Aufgabe wird gemäß einer zweiten Alternativen der Erfindung auch dadurch gelöst, daß die Kupplungshälften über Zahnprofile einer Planverzahnung formschlüssig ineinandergreifen, daß als eine Abstützung ein an einer Kupplungshälfte radial zum Zahnprofil versetzt angebrachter Zapfen vorgesehen ist, dessen Länge mindestens der Tiefe des Zahnprofils entspricht, und dem eine auf dem gleichen Teilkreis liegende Versenkung zugeordnet ist, dieser Zapfen bei winkelrichtiger Zuordnung der Kupplungshälften vollständig einsenkbar ist und daß als weitere Abstützung ein zum einen Zapfen radial versetzter und diametral gegenüberliegender weiterer Zapfen vorgesehen ist, dem eine auf dem gleichen Teilkreis wieder weiterer Zapfen liegende weitere Versenkung zugeordnet ist.

Bei dieser Lösung kann auf eine Abstützung im Bereich der Stirnflächen der Verzahnung verzichtet werden, da in diesem Fall die Abstützung nur noch über die beiden Zapfen erfolgt.

Eine besondere Ausgestaltung der Sicherheitskupplung ergibt sich dann, wenn die Alternativen der erfindungsgemäßen Lösung in einer wiedereinschaltbaren Kupplung eingesetzt werden, bei der zur axial nachgiebigen Abstützung der weiteren Kupplungshälfte gegen die Nabe eine Tellerfeder, insbesondere eine Tellerfeder mit Umschnappcharakteristik, verwendet wird.

Die Erfindung wird im folgenden anhand einer Zeichnung näher erläutert. Dabei zeigen:

Fig. 1 einen Teilschnitt beziehungsweise eine Teilansicht eines ersten Ausführungsbeispiels der erfindungsgemäßen Kupplung,

Fig. 2 einen Schnitt entlang der Linie A-A in Fig. 1 und ein zugehöriges Zeichnungsdetail,

Fig. 3 einen Ausschnitt aus Fig. 1, wobei Fig. 3a den freigeschalteten Zustand, Fig. 3b den wiedereingeschalteten Zustand und Fig. 3c das zugehörige Zahnprofil darstellen,
und

Fig. 4 einen Ausschnitt aus einem zweiten Ausführungsbeispiel der Erfindung, wobei Fig. 4a einen Ausschnitt aus einem Schnitt durch das zweite Ausführungsbeispiel der Erfindung im freigeschalteten Zustand und Fig. 4b das zugehörige Zahnprofil zu Fig. 4a darstellen.

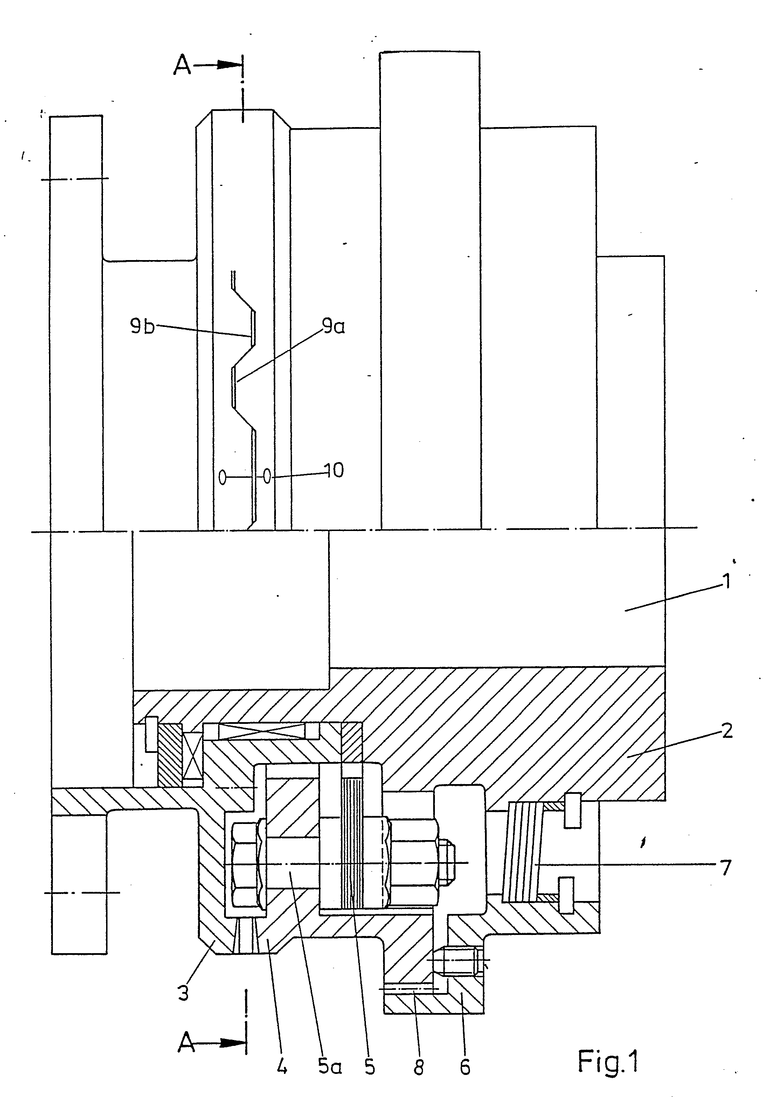

Wie in Fig. 1 gezeigt ist, ist auf einer Welle 1 eine Nabe 2 angeordnet, die einerseits drehbeweglich aber axial gesichert mit einer ersten Kupplungshälfte 3 in Verbindung steht und andererseits mit einer zweiten Kupplungshälfte 4 drehstarr, aber axial beweglich verbunden ist. Die drehstarre Verbindung zwischen der zweiten Kupplungshälfte 4 und der Nabe 2 erfolgt über Lamellenpakete 5, die über längs des Umfangs verteilte Schraubpunkte 5a abwechselnd mit Flanschen in der zweiten Kupplungshälfte 4 und Flanschen in der Nabe 2 verbunden sind. Die beiden Kupplungshälften 3,4 weisen jeweils eine im oberen Bereich von Fig. 1 in Form einer Ansicht dargestellte Zahnprofile 9a, 9b auf, die im eingerückten Zustand der Kupplung in Form einer Planverzahnung formschlüssig ineinandergreifen. Zur Festlegung der winkelrichtigen Zuordnung der beiden Kupplungshälften 3,4 beim Wiedereinschalten ist das Zahnprofil im Bereich der Markierungsstellen 10 auf etwa die doppelte Zahnbreite verbreitert. Die zweite Kupplungshälfte 4 steht mit einem Druckflansch 6 in Verbindung, welcher über ein Tellerfederpaket 7 gegen die Naben 2 abgestützt ist.

Bei Beaufschlagung der Kupplung mit einer Überlast wird der Formschluß zwischen den Zahnprofilen 9a,9b durch eine Relativbewegung der beiden Kupplungshälften 3,4 zueinander aufgehoben und dabei die zweite Kupplungshälfte 4 gegen die Kraft der Tellerfeder 7 verschoben, wobei aufgrund der Umschnappwirkung der Tellerfeder 7 die zweite Kupplungshälfte 4 bei einem bestimmten Ausrückweg in einen stabilen ausgerückten Zustand übergeht und somit dauernd von der ersten Kupplungshälfte 3 getrennt ist.

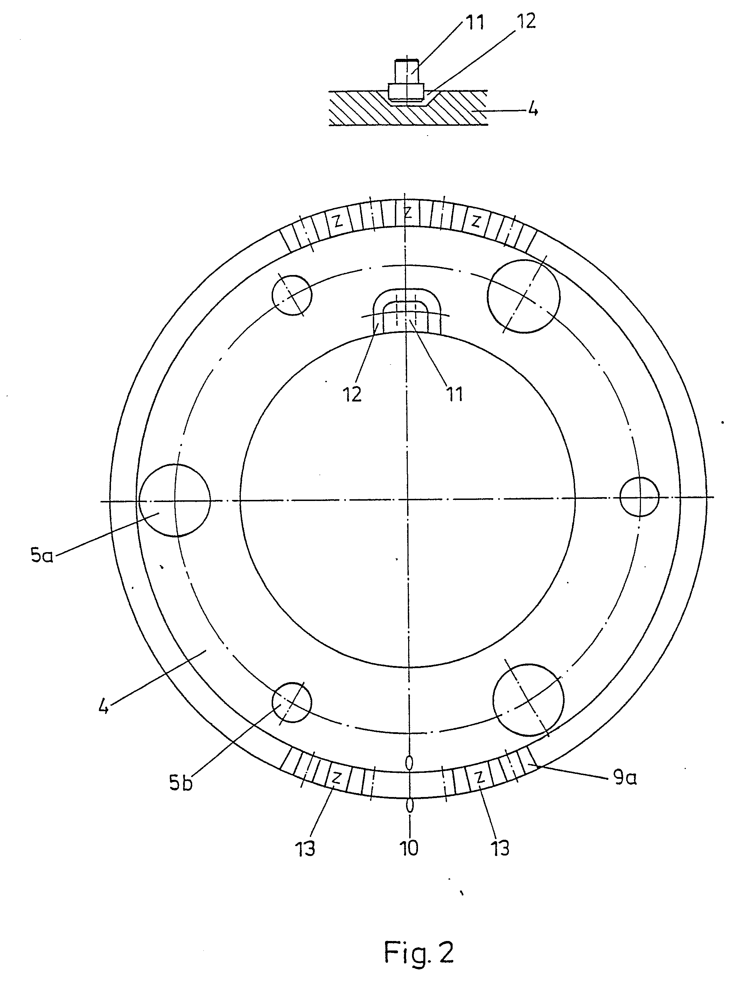

Der in Fig. 2 dargestellte Schnitt entland der Linie A-A zeigt die zweite Kupplungshälfte 4 mit ihrem am äußeren Umfang angebrachten Zahnprofil 9a und den Bohrungen 5a,5b für die jeweiligen Schraubpunkte der bekannten Lamellenverbindung.

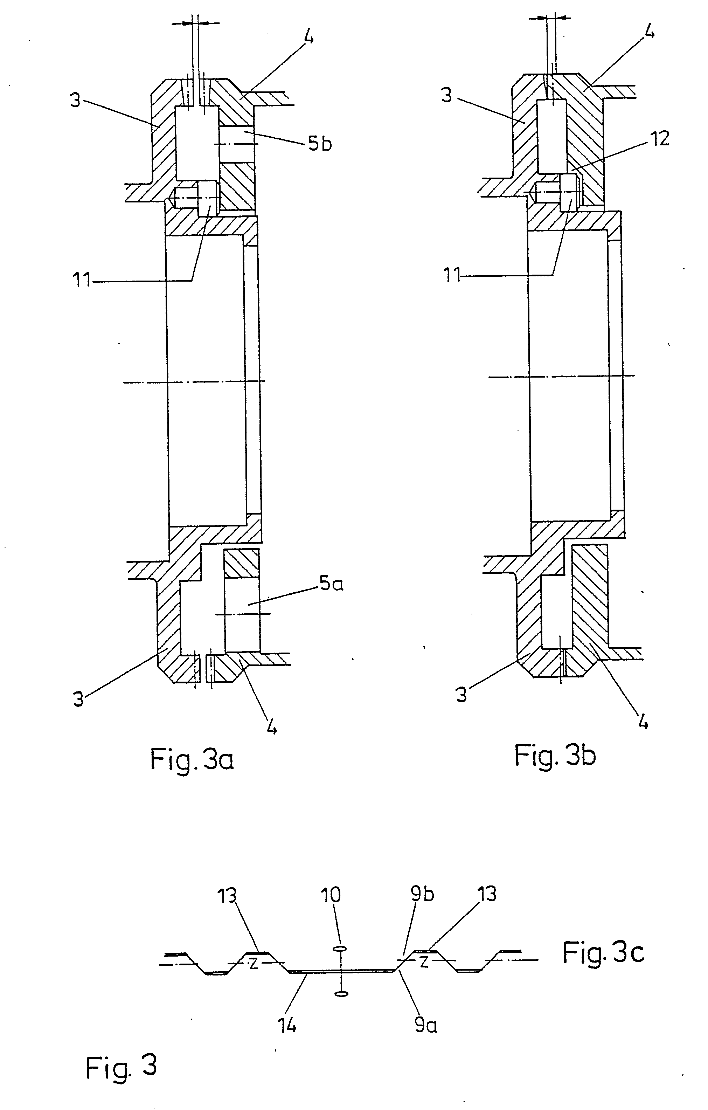

Die in Fig. 2 dargestellte Stellung entspricht der winkelrichtigen Zuordnung der dargestellten Kupplungshälfte 4 zur Kupplungshälfte 3, wobei ein an der ersten Kupplungshälfte 3 angebrachter Zapfen 11 in einer Versenkung 12 in der zweiten Kupplungshälfte 4 einliegt. Solange der Zapfen 11 im noch nicht wiedereingeschalteten (in Fig. 2 nicht gezeigten) Zustand auf der Oberfläche der zweiten Kupplungshälfte 4 gleitet, bildet er eine Abstützung der Kupplungshälften 3,4 gegeneinander. Der freigeschaltete Zustand der Kupplung ist in Fig. 3a, die ebenfalls einen Schnitt entlang der Linie A-A in Fig. 1 darstellt, und der entsprechende wiedereingeschaltete Zustand in Fig. 3b dargestellt. Diametral gegenüberliegend der Versenkung 12 für den Zapfen 11 liegt der Bereich 10 des Zahnprofils 9a der zweiten Kupplungshälfte 4, dessen Stirnflächen 13, die dem verbreiterten Zahn benachbart sind, als weitere Abstützung dienen, wodurch eine symmetrische Zweipunktlagerung der Kupplungshälften 3,4 gegeneinander erzielt wird.

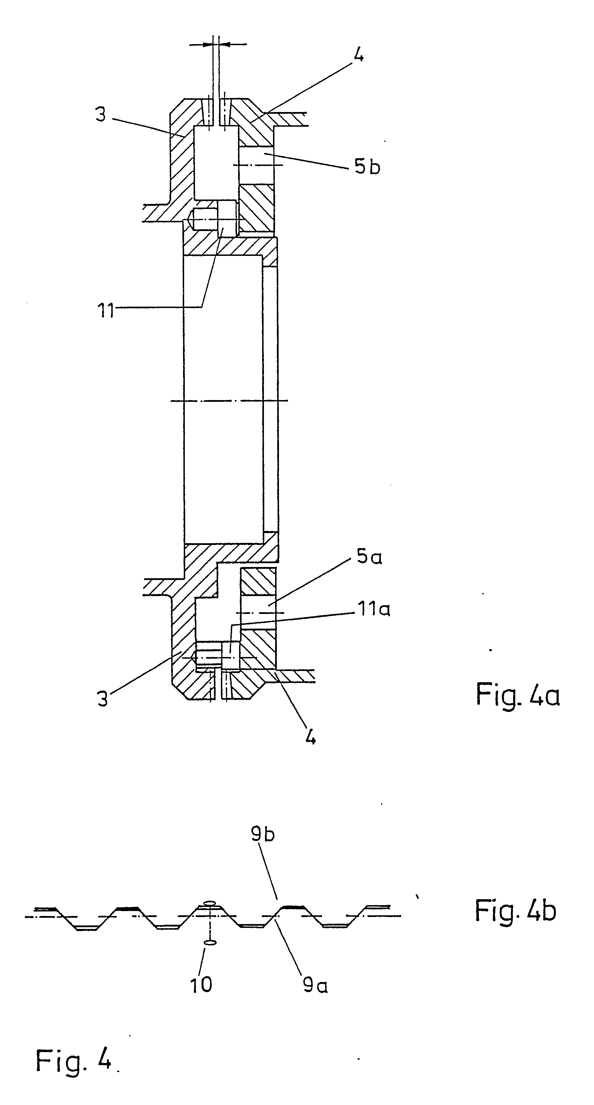

Das in Fig. 4 dargestellte zweite Ausführungsbeispiel der Erfindung unterscheidet sich vom dargestellten ersten Ausführungsbeispiel dadurch, daß das Zahnprofil 9a,9b gleichmäßig ausgelegt ist, das heißt, keinen verbreiterten Zahn aufweist. Stattdessen dient als weitere Abstützung ein weiterer Zapfen 11a, dem eine nicht dargestellte weitere Versenkung zugeordnet ist, in die der Zapfen 11a bei winkelrichtiger Lage der Kupplungshälften 3,4 einrastet. Die beiden Zapfen 11,11a liegen auf unterschiedlichen Teilkreisen, so daß immer jeweils ein Zapfen 11,11a nur in der ihm zugeordneten Versenkung einliegen kann. Diese konstruktive Ausführung eignet sich vor allem dort, wo aus konstruktiven Gründen ein gleichmäßiges Zahnprofil erforderlich ist, wobei in diesem Fall die Zweipunktauflage der Kupplungshälften im noch nicht wiedereingeschalteten Zustand durch die beiden Zapfen 11,11a gebildet wird, die sich wiederum diametral gegenüberliegen.

**Ansprüche**

1. Wiedereinschaltbare Sicherheitskupplung mit einer ersten, in Bezug zu einer auf einer Welle (1) angeordneten Nabe (2) drehbeweglichen Kupplungshälfte (3), mit einer zweiten, drehfest an der Nabe (2) angeschlossenen und gegen die Nabe (2) axial nachgiebig abgestützten Kupplungshälfte (4), wobei die beiden Kupplungshälften (3,4) im eingeschalteten Zustand der Kupplung formschlüssig ineinandergreifen und im freigeschalteten Zustand nach axialer Beaufschlagung der zweiten Kupplungshälfte (4) der Formschluß aufgehoben ist, mit mindestens zwei in Umfangsrichtung symmetrisch angeordneten und radial zueinander versetzten, die Kupplungshälften (3,4) bei nicht winkelrichtiger außer Eingriff haltenden Abstützungen (11,11a,13) und mit die Abstützungen (11,11a,13) bei winkelrichtiger Zuordnung der Kupplungshälften (3,4) aufnehmenden Versenkungen (12,14), **dadurch gekennzeichnet,** daß die Kupplungshälften (3,4) über Zahnprofile (9a,9b) einer Planverzahnung formschlüssig ineinandergreifen, wobei die Stirnflächen (13) der Zahnprofile (9a,9b) eine Abstützung bilden und daß als weitere Abstützung ein an einer Kupplungshälfte (3,4) radial zum Zahnprofil (9a,9b) versetzt angebrachter Zapfen (11) vorgesehen ist, dessen Länge mindestens der Tiefe des Zahnprofils (9a,9b) entspricht, und dem eine auf dem gleichen Teilkreis liegende Versenkung (12) zugeordnet ist, in die der Zapfen (11) bei winkelrichtiger Zuordnung der Kupplungshälften (3,4) vollständig einsenkbar ist.

2. Wiedereinschaltbare Sicherheitskupplung mit einer ersten, in Bezug zu einer auf einer Welle (1) angeordneten Nabe (2) drehbeweglichen Kupplungshälfte (3), mit einer zweiten, drehfest an der Nabe (2) angeschlossenen und gegen die Nabe (2) axial nachgiebig abgestützten Kupplungshälfte (4), wobei die beiden Kupplungshälften (3,4) im eingeschalteten Zustand der Kupplung formschlüssig ineinandergreifen und im freigeschalteten Zustand nach axialer Beaufschlagung der zweiten Kupplungshäfte (4) der Formschluß aufgehoben ist, mit mindestens zwei in Umfangsrichtung symmetrisch angeordneten und radial zueinander versetzten, die Kupplungshälften (3,4) bei nicht winkelrichtiger außer Eingriff haltenden Abstützungen (11,11a,13) und mit die Abstützungen (11,11a,13) bei winkelrichtiger Zuordnung der Kupplungshälften (3,4) aufnehmenden Versenkungen (12,14), **dadurch gekennzeichnet,** daß die Kupplungshälften (3,4) über Zahnprofile (9a,9b) einer Planverzahnung formschlüssig ineinandergreifen, daß als eine Abstützung ein an einer Kupplungshälfte (3,4) radial zum Zahnprofil (9a,9b) versetzt angebrachter Zapfen (11) vorgesehen ist, dessen Länge mindestens der Tiefe des Zahnprofils (9a,9b) entspricht, und dem eine auf dem gleichen Teilkreis liegende Versenkung (12) zugeordnet ist, dieser Zapfen (11) bei winkelrichtiger Zuordnung der Kupplungshälften (3,4) vollständig einsenkbar ist und daß als weitere Abstützung ein zum einen Zapfen (11) radial versetzter und diametral gegenüberliegender weiterer Zapfen (11a) vorgesehen ist, dem eine auf dem gleichen Teilkreis wieder weiterer Zapfen (11a) liegende weitere Versenkung zugeordnet ist.

3. Wiedereinschaltbare Sicherheitskupplung nach Anspruch 1, **dadurch gekennzeichnet,** daß als weitere Abstützung die Stirnflächen (13) in dem dem Zapfen (11) diametral gegenüberliegenden Bereich (10) des Zahnflankenprofils (9a,9b) und als Versenkung die zwischen den Stirnflächen (13) liegenden Zahnflanken und Fußflächen (14) vorgesehen sind.

4. Wiedereinschaltbare Sicherheitskupplung nach Anspruch 1 oder 3, **dadurch gekennzeichnet,** daß die Zahnbreite in dem dem Zapfen (11) diametral gegenüberliegenden Bereich (10) mindestens um den Faktor 2 gegenüber dem übrigen Zahnprofil (9a,9b) vergrößert ist.

5. Wiedereinschaltbare Sicherheitskupplung nach einem der Ansprüche 1 bis 4,
**dadurch gekennzeichnet,** daß die Zapfen (11,11a) Kunststoffzapfen sind.

6. Wiedereinschaltbare Sicherheitskupplung nach einem der Ansprüche 1 bis 5,
**dadurch gekennzeichnet,** daß zur axial nachgiebigen Abstützung der zweiten Kupplungshälfte (4) gegen die Nabe (2) eine Tellerfeder (7), insbesondere eine Tellerfeder (7) mit Umschnappcharakteristik, vorgesehen ist.

Fig.1

Fig. 2

Fig. 3a

Fig. 3b

Fig. 3c

Fig. 3

Fig. 4a

Fig. 4b

Fig. 4.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A- 681 212 (CHICAGO) <br> * Insgesamt * <br> --- | 1-4,6 | F 16 D 43/202 |
| Y | DE-A-3 018 652 (DIERKS) <br> * Seiten 11-16; Figuren 3,4,5 * <br> --- | 1-4,6 | |
| Y | GB-A-1 026 050 (G.M.C.) <br> * Insgesamt * <br> --- | 6 | |
| A | GB-A- 326 514 (WHITE) <br> * Insgesamt * <br> --- | 1,2 | |
| A | DE-A-3 700 730 (JAKOB) <br> --- | | |
| A | FR-A-2 334 004 (GELENKWELLENBAU) <br> --- | | |
| A | DE-A-2 821 079 (LUDWIG) <br> ----- | | |

RECHERCHIERTE SACHGEBIETE (Int. Cl.5)

F 16 D 43/00
F 16 D 7/00
F 16 D 1/00

Der vorliegende Recherchenbericht wurde für alle Patentansprüche erstellt

| Recherchenort | Abschlußdatum der Recherche | Prüfer |
|---|---|---|
| DEN HAAG | 08-11-1989 | BALDWIN D.R. |

EPO FORM 1503 03.82 (P0403)